(19) **Europäisches Patentamt / European Patent Office / Office européen des brevets**

(11) **EP 2 134 662 B1**

(12) **EUROPEAN PATENT SPECIFICATION**

(45) Date of publication and mention of the grant of the patent:
**21.03.2012 Bulletin 2012/12**

(21) Application number: **08718374.5**

(22) Date of filing: **31.03.2008**

(51) Int Cl.:
*C04B 20/10* (2006.01)      *B01J 21/06* (2006.01)
*B01J 23/745* (2006.01)      *B01J 35/00* (2006.01)
*C09D 5/14* (2006.01)

(86) International application number:
**PCT/EP2008/053854**

(87) International publication number:
**WO 2009/121396 (08.10.2009 Gazette 2009/41)**

(54) **USE OF PHOTOCATALYTICALLY COATED PARTICLES FOR DECOMPOSITION OF AIR POLLUTANTS**

VERWENDUNG VON PHOTOKATALYTISCH BESCHICHTETEN TEILCHEN ZUR ZERSETZUNG VON LUFTSCHADSTOFFEN

UTILISATION DE PARTICULES PHOTOCATALYTIQUEMENT ENROBÉES POUR LA DÉCOMPOSITION DE POLLUANTS DE L'AIR

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**23.12.2009 Bulletin 2009/52**

(73) Proprietor: **Rockwood Italia SpA**
**10148 Torino (IT)**

(72) Inventors:
• **MENINI, Claudia**
**10146 Torino (IT)**

• **SERGI, Marino**
**10128 Torino (IT)**

(74) Representative: **Hansen, Norbert**
**Maiwald Patentanwalts GmbH**
**Elisenhof**
**Elisenstraße 3**
**80335 München (DE)**

(56) References cited:
**EP-A- 0 282 329       EP-A- 0 666 107**
**WO-A-01/71121        WO-A-2004/052533**
**WO-A-2008/055542    GB-A- 2 425 075**
**JP-A- 2004 161 978**

EP 2 134 662 B1

**Description**

FIELD OF THE INVENTION

The invention relates to use of iron oxide particles coated with titanium dioxide, and in particular to their use for decomposing air pollutants photocatalytically.

BACKGROUND OF THE INVENTION

In recent years, pollution of air, water and soil has become a key issue especially in urban areas. Air pollutants are mainly emitted into the environment by production processes such as industrial activities or combustion processes such as heating, power generation and motor vehicles. These pollutants can contribute to urban air quality problems, for example photochemical smog, as well as adversely affect human health and the health of other living things.

Two of the major environmental polluting substances include nitrogen oxides ($NO_x$) and volatile organic compounds (VOCs). In particular, these compounds are dangerous as they initiate formation of secondary polluting substances. $NO_x$ and VOCs are also referred to as ozone precursors as the majority of tropospheric ozone formation occurs when $NO_x$ and VOCs react in the atmosphere in the presence of sunlight and carbon monoxide. Moreover, reaction of $NO_X$ and VOCs in the presence of sunlight causes photochemical smog containing *inter alia* peroxyacetyl nitrate (PAN) which is a significant form of air pollution, especially in the summer. Children, people with lung diseases such as asthma, and people who work or exercise outside are susceptible to adverse effects of photochemical smog such as damage to lung tissue and reduction in lung function.

Various solutions have been proposed to reduce the concentration of air polluting substances in the environment.

WO 02/38272 discloses a photocatalytic coating film having oxidizing properties on toluene and which is suitable for deodorization of indoor ambient and purification of gaseous streams contaminated by VOCs.

A building material with photocatalytic activity towards air pollutants such as NOx is described in WO 2006/000565, wherein the photocatalytic activity arises from the presence of $TiO_2$ nanoparticles physically mixed with cement.

A photocatalytic reactor for oxidation of organic contaminants from gases or water is described in US 6136186, wherein the photocatalyst is a porous layer or surface of $TiO_2$ or a binary $TiO_2$ oxide, eventually doped with another metal catalyst, formed on a porous surface.

WO 2006/008434 describes a titanium dioxide coating having VOC degrading as well as self-cleaning and antimicrobial properties.

EP1559753 relates to a photocatalytic potassium silicate paint that contains $TiO_2$ in the anatase form. The paint is designed for use in residential and public buildings to give anti-pollutant, self cleaning properties.

JP 2004 161978 A describes paints capable of sufficiently performing a photocatalytic function for the decomposition of organic materials. These paints comprise titanium oxide photocatalyst coated on the surface of pigment particles.

EP 0 666 107 A2 describes a titanium oxide photocatalyst having an excellent photocatalytic property and comprising titanium oxide particles which have part or the whole of an iron compound contained therein and supported thereon.

There remains a need for materials with improved capability to decompose polluting substances such as nitrogen oxides ($NO_x$) and volatile organic compounds (VOC) in the environment.

SUMMARY OF THE INVENTION

An object of the present invention is the provision of a photocatalytically active material for effectively decomposing air pollutants. The present invention is directed to the use of a suitable material for photocatalytically decomposing air pollutants selected from nitrogen oxides ($NO_x$) . Still another object of the present invention is the use of such materials for decomposing air pollutants, selected from $NO_x$, in building materials. Still another object of the present invention is the use of such materials for decomposing air pollutants, selected from $NO_x$, in paint.

A further object of the present invention is the provision use of a suitable material for reducing photo-corrosion during photocatalytically decomposing air pollutants selected from nitrogen oxides ($NO_x$) .

Furthermore, the invention is directed to the use of iron oxide particles being at least partially coated with titanium dioxide for photocatalytically decomposing NO at reduced $NO_2$ production.

Furthermore, the invention is directed to the use of iron oxide particles being at least partially coated with titanium dioxide for photocatalytic decomposition of air pollutants selected from nitrogen oxides ($NO_x$) .

Furthermore, the invention is directed to the use of iron oxide particles being at least partially coated with titanium dioxide for photocatalytically decomposing NO under UV and/or visible light.

These and other objects of the present invention can be solved by the use described in the claims. Preferred embodiments arise from a combination of the features of the dependent claims with those of the independent claims.

DESCRIPTION OF THE FIGURES

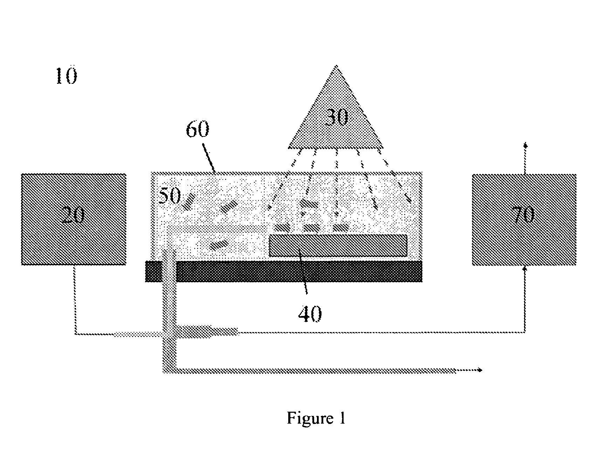

Fig. 1 shows a scheme of an experimental setup (10) suitable for nitrogen conversion tests. The sample (40) is placed inside a 3.61 cell (50) through which the test gas obtained from a gas cylinder (20) is passed at a flow rate of 1.5 1/min. The sample is illuminated through a glass cover (60) by the selected light source (30) mounted above the cell (50). The NO concentration in the outlet gas is analyzed continuously using a gas chromatograph (70).

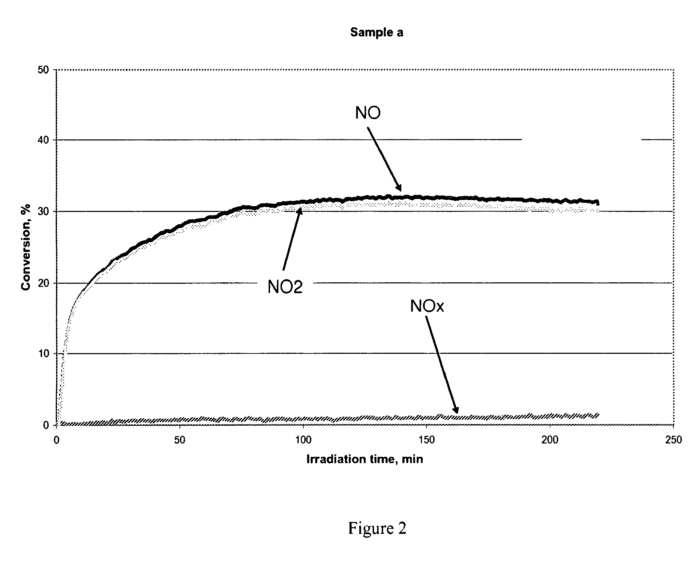

Fig. 2 shows the NO, $NO_2$, $NO_x$ and $O_3$ conversion versus time of irradiation for sample a of Example 1 which is a concrete block containing 6% photocatalytic iron oxide and standard cement.

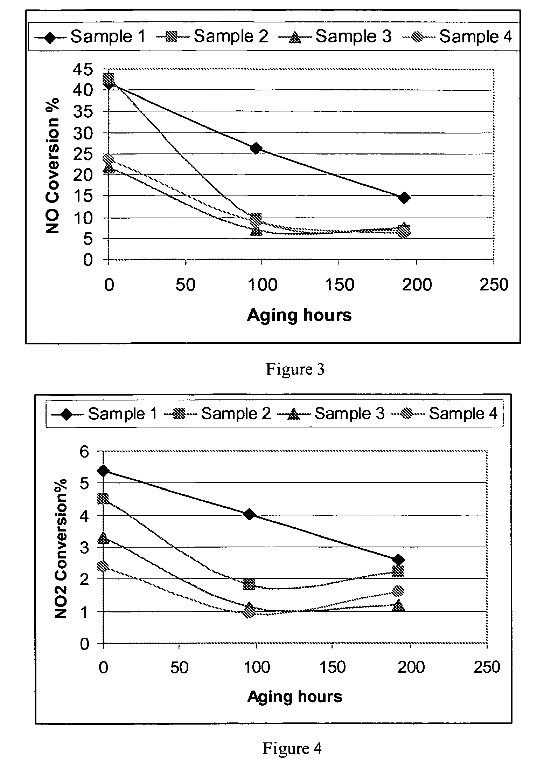

Fig. 3 and Fig. 4 show the photocatalytic conversion of NO and $NO_2$, respectively, measured before aging, after 96 h and after 192 h for the 4 samples described in example 3. Sample 1 is a photocatalytic cement containing no pigment; sample 2 is a photocatalytic cement containing standard iron oxide yellow (3.8 wt.-% based on total cement weight); sample 3 is a standard cement containing photocatalytic iron oxide 1 (45 wt.-% $TiO_2$ based on total pigment weight) in an amount of 6.8 wt.-% based on total cement weight; and sample 4 is a standard cement containing photocatalytic iron oxide 2 (45 wt.-% $TiO_2$ based on total pigment weight) in an amount of 6.8 wt.-% based on total cement weight).

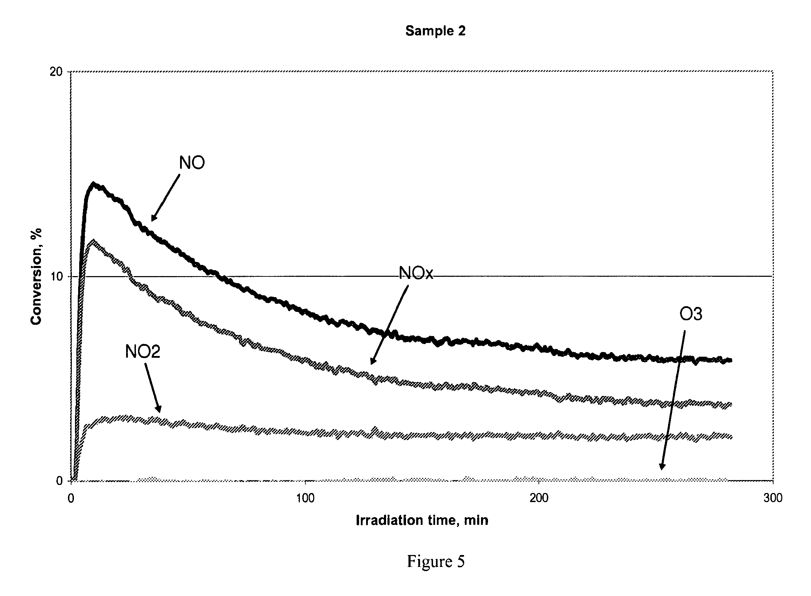

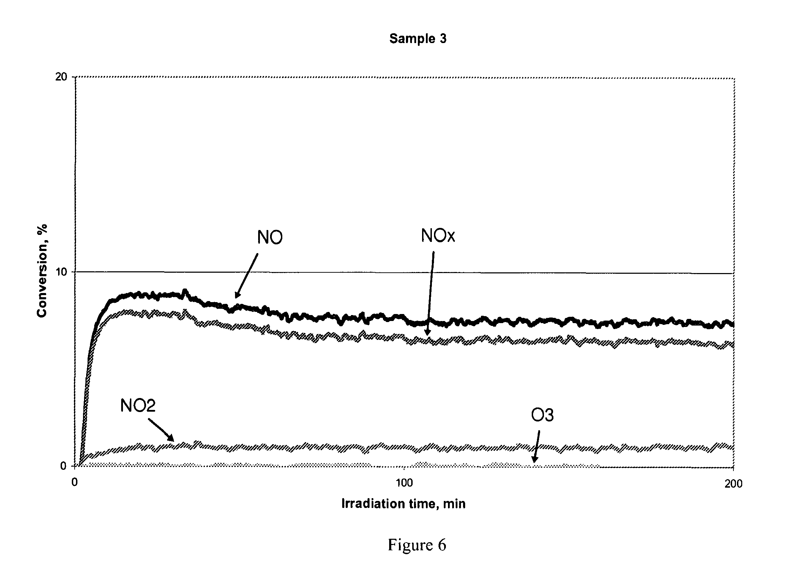

Fig. 5 and Fig. 6 show the NO, $NO_2$ $NO_x$ and $O_2$ conversion versus time of UV irradiation for sample 2 and sample 3 of Example 2, respectively. Sample 2 is a coloured block made with photocatalytic cement and standard iron oxide and sample 3 is a coloured block made with photocatalytic pigment and standard cement.

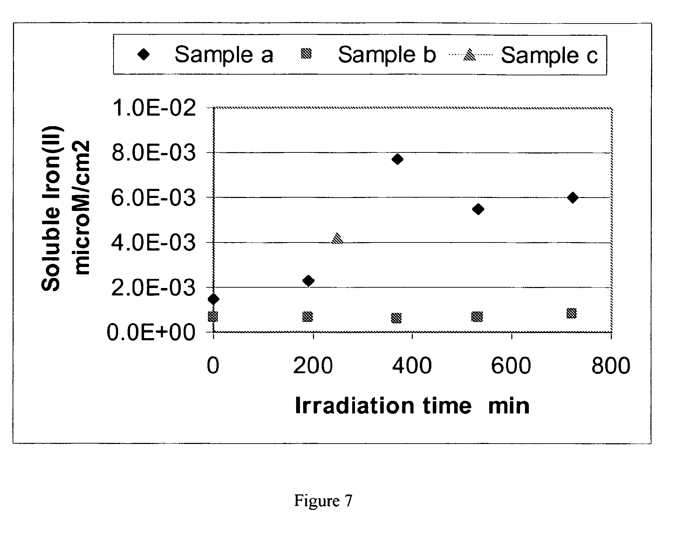

Fig. 7 shows the photodissolution data of Fe(II) for three different samples of Example 3. The plot shows the Fe(II) concentration in the water extract obtained from concrete samples exposed to NO and UV light for different lengths of time as described in example 3. Sample **a** is Ferroxide 48(3 wt.-%) on cement; sample **b** is a photocatalytic iron oxide ($TiO_2$ 21 wt.-% based on total pigment weight) in an amount of 5 wt.-% based on total cement weight; and sample **c** is Ferroxide 48 (3%) on photocatalytic cement.

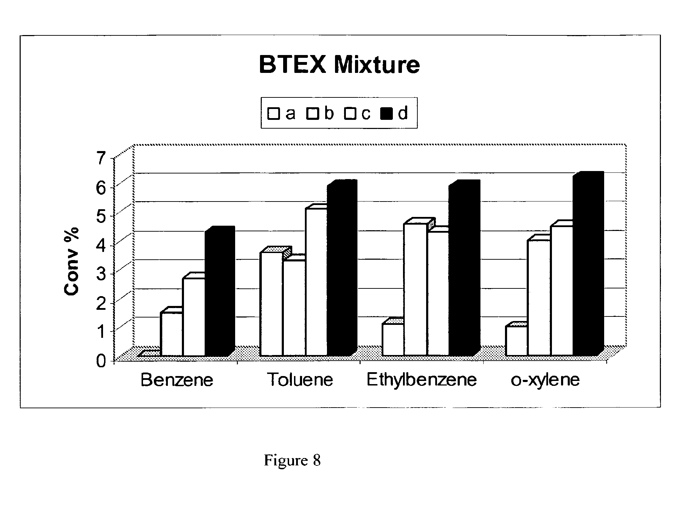

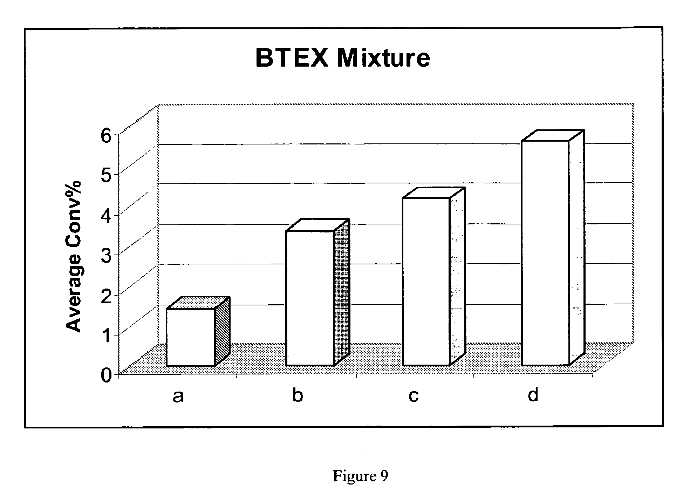

Fig. 8 and Fig. 9 illustrate the conversion and the average conversion, respectively, ofVOCs under UV light for four different samples of Example 4. Fig. 8 shows conversion ofVOCs under UV light as described in example 4. Sample **a** is a photocatalytic cement containing no pigment; sample **b** is a photocatalytic cement containing standard iron oxide yellow (3.8 wt.-% based on total cement weighty sample **c** is a standard cement containing photocatalytic iron oxide yellow A ($TiO_2$ 45 wt.-% based on total pigment weight) in an amount of 6.8 wt.-% based on total cement weight; and sample **d** is a standard cement containing photocatalytic iron oxide yellow B ($TiO_2$ 45 wt.-% based on total pigment weight) in an amount of 6.8 wt.-% based on total cement weight. Fig. 9 shows the total conversion of a mixture of Benzene, Ethylbenzene, Toluene and o-styrene, under UV light as descibed in example 4. Sample **a** is a photocatalytic cement containing no pigment; sample **b** is a photocatalytic cement containing standard iron oxide yellow (3.8 wt.-% based on total cement weight); sample **c** is a standard cement containing photocatalytic iron oxide yellow A ($TiO_2$ 45 wt.-% based on total pigment weight) in an amount of 6.8 wt.-% based on total cement weight; and sample **d** is a standard cement containing photocatalytic iron oxide yellow B (($TiO_2$ 45 wt.-% based on total pigment weight) in an amount of 6.8 wt.-% based on total cement weight.

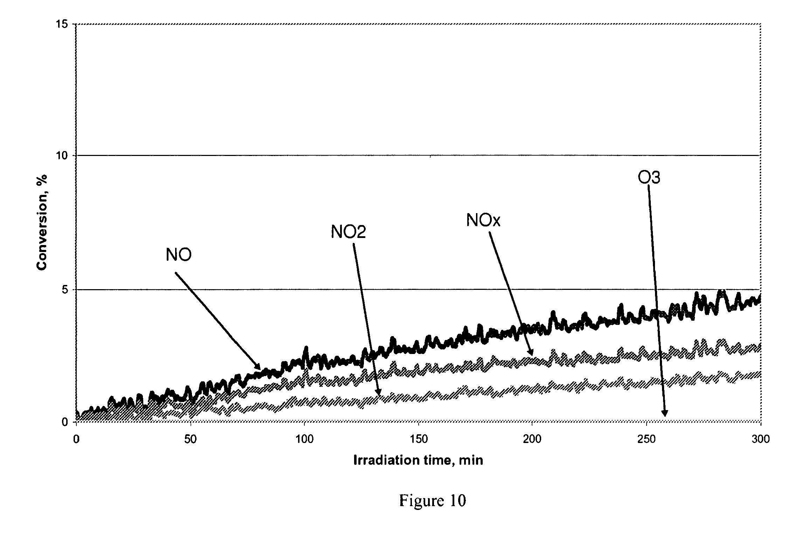

Fig. 10 show the NO, $NO_2$ $NO_x$ and $O_3$ conversion versus time of irradiation for a silicate paint coloured with 5% of a photocatalytic iron oxide (23 wt.-% $TiO_2$ based on total pigment weight) as described in Example 6.

DETAILED DESCRIPTION OF THE INVENTION

Surprisingly, it has been found that a specific type of photocatalytic material, titanium dioxide coated iron oxide particles, are especially suitable for highly effective photocatalytic decomposition of air pollutants, specifically $NO_x$.

The use of iron oxide particles coated with titanium dioxide for photocatalytically decomposing $NO_x$ is highly advantageous, since it allows the provision of conventionally used pigments for colouring applications with photocatalytic properties, e.g. for colouring of building materials, in the paint and coating field or in the paper manufacturing industry.

Furthermore, it has been observed that with conventionally used photocatalysts that are solely titanium dioxide based, the photocatalytic activity degrades over time. With the use of titanium dioxide coated iron particles, the photo-catalytic titanium dioxide as well as the pigment are significantly more stable under UV and visible radiation, allowing for extended lifetime of the pigment as well as the photocatalyst. Also, with the use of titanium dioxide coated iron oxide particles as photocatalysts for degrading $NO_x$, a broader spectrum of radiation can be used, ranging from UV to visible light. It is believed that this is due to a synergistic effect between iron oxide and titanium dioxide.

Also, with the use of titanium dioxide coated iron oxide particles as photocatalysts for degrading $NO_x$, the $NO_2$ production regularly occurring during the degradation of NO is significantly reduced. Ozone production, that may occur during irradiation with UV and visible light in the presence of $NO_x$, has been measured and observed to be limited with these photo-catalytic materials.

In one embodiment of the present invention iron oxide particles used for photocatalytically decomposing air pollutants selected from nitrogen oxides ($NO_x$) are at least partially coated with titanium dioxide. In another embodiment of the present invention the iron oxide particles used for photocatalytically decomposing air pollutants selected from nitrogen oxides ($NO_x$) are completely coated with titanium dioxide.

The titanium dioxide can be randomly distributed on the surface of the inorganic particulate material, e.g. in the form of more or less densely distributed crystalline spots, preferably nano-sized crystallites of titanium dioxide. Alternatively, at higher loadings, the titanium dioxide may also form larger areas of crystalline material on the carrier particle's surface, up to substantially complete coverage.

In an exemplary embodiment of the uses of the present invention the iron oxide particles being at least partially coated with titanium dioxide are incorporated into a building material. For example, the particles can be mixed with the building material. In another exemplary embodiment of the uses of the present invention the iron oxide particles being at least partially coated with titanium dioxide are applied on a building material. For example, the particles can be applied on a building material in form of a water-based coating or paint. The building material of the present invention can comprise an inorganic material such as concrete, cement, mortar, limestone or gypsum.

In another exemplary embodiment of the uses of the present invention the iron oxide particles being at least partially coated with titanium dioxide are incorporated into a paint. For example, the particles can be mixed with the paint or dispersed in the paint. The paint can comprise, e.g., a silicate based paint, an acrylic paint, oil paint or water-based paint.

The particles for the use described in the present invention can be manufactured by a process as described in applicant's co-pending patent application no. PCT/EP2006/068245, wherein, for example, an inorganic iron oxide dispersion is mixed with an aqueous solution of at least one titanyl salt, e.g., titanyl sulfate, titanium chloride or titanyl oxalate, and precipitating titanium dioxide on said iron oxide particle by adding an alkali, wherein the titanium oxide is precipitated at least partially. Finally, the iron oxide particle coated with the photocatalytically active compound is isolated from the reaction mixture by, for example, filtration and subsequent washing and drying at low temperatures. The particles suitable for the uses of the present invention may have a particle size ranging from 0.01 to 100 μm and may have a surface area ranging from about 5 to 200 m$^2$/g. For the uses of the present invention the particles can be provided in shaped form, e.g. granulates, pellets or tablets.

Without wishing to be bound to any theory, it is believed that upon exposure to sunlight, the polluting substances nitrogen oxides ($NO_x$) and volatile organic compounds (VOC) can be disintegrated in the presence of titanium dioxide coated iron oxide particles, which produces radicals and/or other active species which interact with the pollutants. This results in degradation or decomposition reactions of these molecules, e.g., nitrogen oxide gases can be oxidized to nitrates, and can substantially reduce concentrations of such pollutants. Thus, the concentration of these substances, e.g. on building materials, is reduced, resulting in a maintained brilliance of the colour for an extended period of time and, furthermore, to a reduced concentration of environmental polluting substances in the environment. In addition, the quality of the air can be improved, resulting in an anti-smog-effect.

The inventors have found that the use of titanium dioxide coated iron oxide particles instead of conventional pigments in colouring applications results in an improved colour fastness for an extended period of time. Moreover, the inventors have found that titanium dioxide coated iron oxide particles show reduced photo-corrosion in comparison with conventional iron oxide pigments. Figure 7 shows that photodissolution of Fe(II) is evident only for the cement block including standard iron oxide pigment but not for the cement block including titanium dioxide coated iron oxide particles. Thus, the present invention also provides for a long term stability of the iron oxide pigments by reducing photo-corrosive effects.

Furthermore, the inventors have found that with the use of titanium dioxide coated iron oxide particles a greater stability of nitric oxide conversion over time of exposure compared to the use of conventional photocatalytic compounds can be attained. As shown in Fig. 5 and 6 the decrease in nitric oxide conversion during UV exposure is less pronounced for the coloured cement blocks made with titanium dioxide coated iron oxide particles compared to the coloured cement blocks comprising conventional photocatalytic cement and an iron oxide pigment. In addition figure 3 shows the cements blocks made with titanium coated iron oxide particles exhibit greater stability of nitric oxide conversion compared with the cement blocks made with colored photocatalytic cement.

Also, it was found that with the use of titanium dioxide coated iron oxide particles the formation of $NO_2$ regularly

occurring during the photocatalytic process is significantly reduced compared the use of conventional photocatalytic compounds. Without wishing to be bound to any theory, the inventors believe that at least some of the aforementioned observations suggest a synergetic effect of iron oxide and titanium oxide when being in intimate contact.

EXAMPLES

*Nitrogen oxide conversion test*

The experimental apparatus (10) used for the nitrogen oxide (NO) conversion tests is shown schematically in Fig. 1. The sample (40) is placed inside a 3.6 1 cell (50) through which the test gas obtained from a gas cylinder (20) is passed at a flow rate of 1.5 1/min. The sample is illuminated through a glass cover (60) by the selected light source (30) mounted above the cell (50).

A mixture of synthetic humid air (79% $N_2$, 21 % $O_2$, 50% relative humidity) and 0.5 ppmv of NO at 1.5 1/min was used as inlet gas. For testing under UV illumination the sample was irradiated with a Hg HP125 (radiant power 40 $Wm^{-2}$ in the range 290-400 nm) lamp emitting in the UV region. The concentration of NO in the outlet gas was continuously analyzed by gas chromatography (70).

For measurement under visible or UV-visible light, the irradiating source was a Philips PAR30S lamp (100 W, radiant power 178 W $m^{-2}$ in the range 400-700nm) or a Xenon LOT Oriel lamp (150 W operated at 140 W, 25% power of the Philips lamp and 36% Hg lamp), respectively.

The percentages of NO converted into $NO_2$ are defined as:

$$\% \text{ NO Conversion} = (C_{NO\ inlet} - C_{NO\ outlet})/ C_{NO\ inlet}) * 100$$

$$\% \text{ NO}_2 \text{ Conversion} = C_{NO2\ outlet}/ C_{NO\ inlet} * 100$$

$NO_x$ is the NO converted in products different from $NO_2$ and is defined as:

$$\% NO_x \text{ Conversion} = \% \text{ NO Conversion} - \% NO_2 \text{ Conversion}$$

*Volatile organic compounds conversion test*

The experimental arrangement was similar to the NO conversion test described above, the outlet gas was analyzed in a discontinuous way (every 30-40 min) after trapping in a cryogenic apparatus by gas-mass quadrupole spectroscope. The inlet gas was a BTEX mixture (13.5 ppbv toluene, 23 ppbv ethylbenzene, 20 ppbv o-xylene, 20 ppbv benzene) of 76.5 ppbv total partial pressure flowing at 1.5 l/min.

*Colorimetric measurement*

The colorimetric measurements are performed on the concrete sample using a Minolta Konica DP301 coupled with an illuminating system CR310 with a D65 lamp. Data are expressed using the CieLab scale.

For the tinting strength a Gardner-BYK colorimeter (45/0 measurement angle) was used. Tinting strength values are based on the difference between areas under the reflectance curves for the tested samples and the standard sample.

*Concrete Sample Preparation Methods*

**Method 1:** Concrete samples were prepared by mixing the respective pigment with white Portland cement (Aquila Bianca CEM II/B-LL 32,5R), sand (Sibelco 2, Sibelco 5/RD) and water. The relative quantities are given in the table below:

|  | weight (g) | wt.-% based on... |
|---|---|---|
| Sibelco 2 | 289 | 72.3 total sand weight |
| Sibelco 5/RD | 111 | 27.7 total sand weight |

(continued)

|  | weight (g) | wt.-% based on... |
|---|---|---|
| Water | 46.2 | 35 total cement weight |
| Cement | 132 | 33 total sand weight |

Sand, pigment and water were mixed with an electric mixer (Bifinet KH203, 230 W, 5 speed) with one metal beater for 30 s at speed 2, then cement was added and mixed for another 30 s at speed 2. Subsequently, the obtained material is manually mixed with a spatula followed by another 60 s of electric mixing at speed 3. The concrete mixture is poured into a rounded mould having a diameter of 7 cm. The samples were dried in an oven at 110°C for two hours inside a plastic bag and for another 15 min in contact with the atmosphere.

In some tests, instead of Portland cement, a photocatalytic cement was used (TX Aria white). The pigment employed as standard yellow iron oxide was Ferroxide 48 produced by Rockwood Pigment. After drying in a vented oven, the samples were aged at 90°C and 95% relative humidity for 192 h to accelerate the deactivating effect of ageing.

**Method 2:** Samples were prepared using normalised sand DIN EN 196-1 (Normensand) mixed in the following quantities

|  | weight (g) | wt.-% based on... |
|---|---|---|
| Normalised sand | 400 | 77 total mixture weight |
| Water | 27 | 30 total cement weight |
| Cement | 90 | 22.5 total sand weight |

Mixing and drying procedure were as in Method 1.

Samples were tested after 3 months outdoor aging.

_Example 1_

The NO conversion under UV lamp of a photo-catalytic iron oxide sample ($TiO_2$ 23 wt.-% based on total pigment weight) was measured, under UV illumination, on the pigment itself and when included (6 wt.-% pigment based on cement weight) in a concrete matrix (Sample **a**). In addition, a concrete sample, (Sample **b**), was made with photo-catalytic cement (TX Aria white) and 6% Ferroxide 48. All concrete samples were prepared according to Method 2 above and tested after 3 months outdoor aging.

Results are reported in the following table:

|  | converted % NO at 180 min | converted % $NO_2$ at 180 min | % $NO_2$ produced |
|---|---|---|---|
| Pigment | 66.4 | 45.4 | 68.4 |
| Sample **a** | 31.5 | 1 | 3.2 |
| Sample **b** | 30 | 7 | 23.3 |

The data show that the cement containing photocatalytic iron oxide produces less $NO_2$ than the reference photocatalytic cement commercially in use today.

Fig. 2 shows the conversion versus time of irradiation for sample a. As can be seen from the plot the conversion starts from 0 and increases in few minutes after switching the light, reaches an equilibrium value, and then remains stable under irradiation.

It should be noted that the conversion plot shown in Fig. 5 and reported in Example 2 for sample 2 (photocatalytic cement/ iron oxide) instead shows a different profile, evidencing the different conversion mechanism of the two photo-catalytic materials.

The photocatalytic material of this invention exhibits greater stability of nitric oxide conversion over time of exposure compared to reference photocatalytic cements. In addition the reaction over photocatalytic iron oxide generates less $NO_2$. While the inventors do not wish to be bound by the theory, these two considerations suggest a synergetic effect of the two oxides (iron and titanium) when in intimate contact.

_Example 2_

Four concrete samples were prepared as described in Method 1 and left in a humidity chamber at T=95°C and 90% humidity (accelerated aging) for different length of time. The following samples were prepared:

Sample 1: Photocatalytic cement, no pigment
Sample 2: Photocatalytic cement, standard iron oxide yellow (3.8 wt.-% based on total cement weight)
Sample 3: Standard cement, photocatalytic iron oxide 1 (45 wt.-% $TiO_2$ based on total pigment weight), 6.8 wt.% based on total cement weight
Sample 4: Standard cement, photocatalytic iron oxide 2 (45 wt.-% $TiO_2$ based on total pigment weight), 6.8 wt.-% based on total cement weight

Photocatalytic iron oxide 1 and 2 are materials prepared as described in patent application no. PCT/EP2006/068245 following two different preparation steps.

The photocatalytic conversion under UV light was measured before aging, after 96 h and after 192 h. The data are reported in Fig. 3 and 4 and in the following tables:

| Sample | conversion at 0 h | | conversion at 96 h | | conversion at 192 h | |
|---|---|---|---|---|---|---|
| | % NO | % not | % NO | % not | % NO | % NO_2 |
| 1 | 41.7 | 5.39 | 26.3 | 4.02 | 14.6 | 2.58 |
| 2 | 42.7 | 4.49 | 9.56 | 1.8 | 6.7 | 2.23 |
| 3 | 21.9 | 3.3 | 6.93 | 1.12 | 7.5 | 1.2 |
| 4 | 23.6 | 2.37 | 8.89 | 0.92 | 6.2 | 1.6 |

| Sample | Δ( converted %) NO 196 h - 0 h aging |
|---|---|
| 1 | -65% |
| 2 | -84% |
| 3 | -66% |
| 4 | -74% |

Furthermore, the NO conversion of the two photocatalytic oxides was comparable to the coloured block produced with photocatalytic cement.

Figures 5 and 6 show that the decrease in NO conversion with time of UV exposure is less pronounced for the coloured blocks made with photocatalytic pigment compared to the coloured blocks made with photocatalytic cement showing a higher NO conversion stability of these materials. The conversion plots also shows that the conversion under UV light in presence of NO did not produce ozone.

For sample 3 and 4 also the colorimetric values were measured as reported in the following table showing good colouring performances of the photocatalytic pigment.

Tinting strength was measured against Ferroxide 48 at 3.8 wt.-% based on total cement weight (equal iron oxide contents).

| | L | a | b | TS% |
|---|---|---|---|---|
| Sample 3 | 74.76 | 2.96 | 36.04 | 83.9 |
| Sample 4 | 73.94 | 3.77 | 35.94 | 81.8 |

_Example 3_

Two concrete samples were prepared as in Method 1 and irradiated under UV light:

Sample **a:** Ferroxide 48,3% on cement
Sample **b:** Photocatalytic iron oxide (TiO$_2$ 21 wt.-% based on total pigment weight,) 5 wt.-% based on total cement weight

As in the NO conversion test the samples were exposed to UV light in presence of NO. Fe(II) was determined on the extraction liquid after different lengths of time, wherein the extraction procedure was performed as follows: The concrete block was percolated with H$_2$SO$_4$ 2 mM previously deoxygenated and exposed for 10 min to microwave at 375 W. The solution was filtered and Fe(II) was measured by the Absorbtion at a wavelength of 510 nm after o-phenanthro line addition. Data are plotted in the Fig. 7 showing that photodissolution of Fe(II) is evident only for the standard iron oxide (Ferroxide 48) under UV-NO condition but not for the photocatalytic iron oxide.

|  | Soluble iron(II) $\mu$M/cm2 | |
| --- | --- | --- |
| Time min | Sample a | Sample b |
| 0 | $1.5 \cdot 10^{-03}$ | $7.0 \cdot 10^{-04}$ |
| 190 | $2.3 \cdot 10^{-03}$ | $7.0 \cdot 10^{-04}$ |
| 370 | $7.7 \cdot 10^{-03}$ | $6.0 \cdot 10^{-04}$ |
| 530 | $5.5 \cdot 10^{-03}$ | $7.0 \cdot 10^{-04}$ |
| 720 | $6.0 \cdot 10^{-03}$ | $8.0 \cdot 10^{-04}$ |

Those data may be compared with the value for a concrete block made of photocatalytic cement and 3% Ferroxide (Sample c) which is also shown in Fig. 7. After 250 min the Fe(II) present in the extract was $4.23 \cdot 10^{-03}$, higher than for the photocatalytic oxide used according to the invention.

*Example 4* (comparative)

Four concrete samples were prepared as described in Example 1 and left in a humidity chamber at T=95°C and 90% humidity (accelerated aging) for 192 hours. The following samples were prepared:

Sample a: Photocatalytic cement, no pigment

Sample b: Photocatalytic cement, standard iron oxide yellow 3.8 wt.-% based on total cement weight

Sample c: Standard cement, photocatalytic iron oxide yellow A (TiO$_2$ 45 wt.-% based on total pigment weight), 6.8 wt.-% based on total cement weight

Sample d: Standard cement, photocatalytic iron oxide yellow B ((TiO$_2$ 45 wt.-% based on total pigment weight), 6.8 wt.% based on total cement weight

Photocatalytic iron oxide yellows A and B were both prepared according to PCT/EP2006/068245 with 45 wt.-% TiO$_2$ loading based on total pigment weight.

Conversion of VOCs under UV light were measured as described above. Percentages of conversion are reported in the following table:

| conversion in % | benzene | toluene | ethylbenzene | o-xylene | average BTEX conversion in % |
| --- | --- | --- | --- | --- | --- |
| a | 0 | 3.6 | 1.1 | 1 | 1.4 |
| b | 1.5 | 3.3 | 4.6 | 4 | 3.4 |
| c | 2.7 | 5.1 | 4.3 | 4.5 | 4.2 |
| d | 4.3 | 5.9 | 5.9 | 6.2 | 5.6 |

The results plotted in Fig. 8 and 9 demonstrate that the photocatalytic iron oxides of the present invention show a greater capacity to remove VOC's than the conventional photocatalytic materials in use today.

*Example 5*

Two concrete samples were prepared as described in Example 1 and left in a humidity chamber at T=95°C and 90% humidity (accelerated aging) for 192 hours. The following samples were prepared:

Sample 1: Standard cement, photocatalytic iron oxide yellow (Sample A) ($TiO_2$ 45 wt.-% based on total pigment weight, Sample a) 6.8 wt.-% based on total cement weight

Sample 2: Standard cement, photocatalytic iron oxide yellow (Sample B) ($TiO_2$ 45 wt.-% based on total pigment weight, Sample b) 6.8 wt.-% based on total cement weight

Both photocatalytic oxides convert NO when irradiated with light in the visible spectra region as can be seen from the data shown in the following table. As in Example 4 with UV irradiation, ozone is not produced during the reaction.

| Sample | % converted NO | % converted $NO_2$ | % converted $O_3$, |
|--------|----------------|--------------------|--------------------|
| A      | 7.9            | 2.2                | 0                  |
| B      | 6.2            | 3.1                | 0                  |

*Example 6*

5% of a photocatalytic iron oxide (23 wt.-%$TiO_2$ based on total pigment weight) has been incorporated into a silicate based paint (based on 28.25% water, 23% Consolref K, 38% inerts, 9% styrene acrylate) and applied on a concrete surface. Conversion of NO was measured in the standard method, and conversion plot is shown in Fig. 10.

**Claims**

1. A use of iron oxide particles being at least partially coated with titanium dioxide, for photocatalytically decomposing air pollutants selected from nitrogen oxides ($NO_x$) that come into contact with said particles.

2. The use according to claim 1, wherein the iron oxide particles are incorporated into a building material.

3. The use according to claim 1, wherein the iron oxide particles are applied on a building material.

4. The use according to claim 2 or 3, wherein the building material is selected from the group consisting of concrete, cement, mortar, limestone or gypsum.

5. The use according to claim 1, wherein the iron oxide particles are incorporated into a paint.

6. The use according to claim 1 for photocatalytically decomposing NO at reduced $NO_2$ production.

7. The use according to claim 1 for avoiding ozone production during photocatalytic decomposition of air pollutants selected from nitrogen oxides ($NO_x$).

8. The use according to claim 1 for photocatalytically decomposing NO under UV and/or visible light.

9. The use according to claim 1 for reducing photo-corrosive effects of the iron oxide particles during photocatalytically decomposing air pollutants selected from nitrogenoxides ($NO_x$).

**Patentansprüche**

1. Verwendung von mindestens partiell mit Titandioxid beschichteten Eisenoxidpartikeln für den photokatalytischen Abbau von Luftschadstoffen ausgewählt aus Stickoxiden ($NO_x$), welche in Kontakt mit den Partikeln kommen.

2. Verwendung gemäß Anspruch 1, wobei die Eisenoxidpartikel in ein Baumaterial eingetragen sind.

**3.** Verwendung gemäß Anspruch 1, wobei die Eisenoxidpartikel auf ein Baumaterial aufgebracht werden.

**4.** Verwendung gemäß Anspruch 2 oder 3, wobei das Baumaterial ausgewählt ist aus der Gruppe bestehend aus Beton, Zement, Mörtel, Kalkstein oder Gips.

**5.** Verwendung gemäß Anspruch 1, wobei die Eisenoxidpartikel in eine Farbe eingetragen sind.

**6.** Verwendung gemäß Anspruch 1, für den photokatalytischen Abbau von NO bei verringerter $NO_2$ Produktion.

**7.** Verwendung gemäß Anspruch 1, für das vermeiden einer Ozonbildung während des photokatalytischen Abbaus von Luftschadstoffen ausgewählt aus Stickoxiden ($NO_x$).

**8.** Verwendung gemäß Anspruch 1, für den photokatalytischen Abbau von NO unter UV und/oder sichtbarem Licht.

**9.** Verwendung gemäß Anspruch 1, für das reduzieren photokorrosiver Effekte von Eisenoxidpartikeln, während dem photokatalytischen Abbau von Luftschadstoffen ausgewählt aus Stickoxiden ($NO_x$).

**Revendications**

**1.** Utilisation de particules d'oxyde de fer qui sont au moins partiellement revêtues de dioxyde de titane pour décomposer par voie de photocatalyse des polluants de l'air sélectionnés parmi les oxydes d'azote ($NO_x$) qui viennent en contact avec lesdites particules.

**2.** Utilisation selon la revendication 1, dans laquelle les particules d'oxyde de fer sont incorporées dans un matériau de construction.

**3.** Utilisation selon la revendication 1, dans laquelle les particules d'oxyde de fer sont appliquées sur un matériau de construction.

**4.** Utilisation selon la revendication 2 ou 3, dans laquelle le matériau de construction est sélectionné dans le groupe constitué par le béton, le ciment, le mortier, le calcaire ou le gypse.

**5.** Utilisation selon la revendication 1, dans laquelle les particules d'oxyde de fer sont incorporées dans une peinture.

**6.** Utilisation selon la revendication 1 pour décomposer par voie de photocatalyse les NO avec une production réduite de $NO_2$.

**7.** Utilisation selon la revendication 1 pour éviter la production d'ozone pendant la décomposition photocatalytique des polluants de l'air sélectionnés parmi les oxydes d'azote ($NO_x$).

**8.** Utilisation selon la revendication 1 pour décomposer par voie de photocatalyse les NO sous les UV et/ou la lumière visible.

**9.** Utilisation selon la revendication 1 pour réduire les effets photocorrosifs des particules d'oxyde de fer pendant la décomposition par voie de photocatalyse des polluants de l'air sélectionnés parmi les oxydes d'azote ($NO_x$).

Figure 1

Figure 2

EP 2 134 662 B1

Figure 3

Figure 4

Figure 5

EP 2 134 662 B1

Figure 6

EP 2 134 662 B1

Figure 7

BTEX Mixture

Figure 8

Figure 9

EP 2 134 662 B1

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0238272 A
- WO 2006000565 A
- US 6136186 A
- WO 2006008434 A
- EP 1559753 A
- JP 2004161978 A
- EP 0666107 A2
- EP 2006068245 W